# EUROPEAN PATENT SPECIFICATION

(11) **EP 2 085 362 B1**
(45) Date of publication and mention of the grant of the patent: **20.04.2011**
(21) Application number: 08171213.5
(22) Date of filing: 10.12.2008
(51) Int. Cl.: C01G 15/00

(54) **Method for making a copper indium chalcogenides powder**
Verfahren zur Herstellung von Kupfer-Indium-Chalcogenid-Pulver
Procédé de fabrication de poudre à base de chalcogénures d'indium et de cuivre

(30) Priority: 31.01.2008 TW 97103740; 31.01.2008 TW 97103743
(43) Date of publication of application: 05.08.2009
(73) Proprietor: Nanowin Technology Co., Ltd, Tainan County (TW)
(72) Inventor: Fu, Richard Y.S., Kaohsiung County (TW); Huang, Wen-Chi, Tainan City 701 (TW); Chou, Bang-Yen, Tainan City (TW); Lin, Shih-Jen, Kaohsiung County (TW); Chen, Chun-Hui C.C., Tainan County (TW)
(74) Representative: Jenkins, Peter David

(56) References cited:
- US-A1- 2007 099 332
- PENG ET AL: "Shape-controlled synthesis and optical characterization of chalcopyrite CuInS2 microstructures" JOURNAL OF CRYSTAL GROWTH, ELSEVIER, AMSTERDAM, NL, vol. 305, no. 1, 8 June 2007 (2007-06-08), pages 99-103, XP022110834 ISSN: 0022-0248
- PARKIN ET AL.: "Solid-state and solution phase metathetical synthesis of copper indium chalcogenides" JOURNAL OF MATERIAL CHEMISTRY, vol. 8, no. 10, 1998, pages 2209-2211, XP002522039 London

## Description

This application claims priorities of Taiwanese Application No. 097103740, filed on January 31, 2008, and Taiwanese Application No. 097103743, filed on January 31, 2008.

This invention relates to a method for making a copper indium chalcogenides powder, more particularly to a method involving reacting a reactant mixture in a polar organic solvent for making a copper indium chalcogenides powder.

Copper indium chalcogenides materials, such as CuInSe₂, Cu (InₓGa₁₋ₓ) (Se_{y}S_{2-y}), and Cu (InₓAl₁₋ₓ) (Se_{y}S_{2-y}), are used in the production of a p-type semiconductor absorption layer of a solar cell due to their high optoelectric efficiency and low cost.

Claire J. Carmalt et. al (J. Master. Chem., 1998, 8(10), 2209-2211) disclose a method for making a copper indium chalcogenides powder. The method includes dissolving a mixture of CuBr, InCl₃, and Na₂Se in a solvent of C₇H₈ for about 72hr, refluxing the mixture, and removing the solvent from the mixture so as to obtain a solid compound. Subsequently, the solid compound is subjected to an annealing treatment under a temperature of 500°C for 24hr so as to form the copper indium chalcogenides powder having a structure of a chalcopyrite phase. However, the copper indium chalcogenides powder thus formed still contains a significant amount of undesired sphalerite phase in the structure, which has an adverse effect on the optoelectric efficiency.

Chen et al., Journal of Crystal Growth 305 (2007) 99-103, discloses shape-controlled synthesis and optical characterisation of chalcopyrite CuInS₂ microstructures.

Bin Li et al. (ADv. Mater, 1999, 11, No.17, 1456-1459) disclose a solvothermal synthesis method for making cuInSe₂ nano-materials. A mixture of CuCl₂ · 2H₂O, InCl₃ · 4H₂O, and Se is dissolved in a solvent of hydrous dimethylamine or ethylenediamine in an autoclave, and then the autoclave is closed and maintained at a temperature of 180°C for 15hr to subject the mixture to reaction to form a precipitate. After cooling the autoclave to room temperature, the precipitate thus formed is rinsed by water and ethanol for several times so as to remove by-product from the precipitate. Finally, the precipitate is dried under a temperature of 60°C for 4hr in a vacuum environment so as to form the copper indium chalcogenides powder having a structure of a chalcopyrite phase. However, the copper indium chalcogenides powder thus formed still contains a significant amount of the undesired sphalerite phase. In addition, the reaction system requires to be conducted in an autoclave, which results in an increase in the manufacturing costs.

Therefore, an object of the present invention is to provide a method for making a copper indium chalcogenides powder that can overcome the aforesaid drawbacks associated with the prior art.

According to the present invention, a method for making a copper indium chalcogenides powder comprises: (a) refluxing a reactant mixture that contains a Cu-containing material, an In-containing material, and a chalcogenides-containing material in a polar organic solvent so as to form a precipitate of the copper indium chalcogenides in the polar organic solvent, the polar organic solvent being selected from the group consisting of dimethyl formamide, 1-Butyl-3-methylimidazolium hexafluorophosphate, and combinations thereof; and (b) separating the polar organic solvent from the precipitate so as to obtain the copper indium chalcogenides powder.

Preferred features of the method are defined in the dependent claims.

Other features and advantages of the present invention will become apparent in the following detailed description of the preferred embodiment of this invention, with reference to the accompanying drawings, in which:
Fig. 1 is an X-ray diffraction graph of a copper indium chalcogenides powder of Example 1 of the preferred embodiment according to this invention;
Fig. 2 is an X-ray diffraction graph of the copper indium chalcogenides powder of Example 2 of the preferred embodiment;
Fig. 3 is an X-ray diffraction graph of the copper indium chalcogenides powder of Example 3 of the preferred embodiment;
Fig. 4 is an X-ray diffraction graph of the copper indium chalcogenides powder of Example 4 of the preferred embodiment;
Fig. 5 is an X-ray diffraction graph of the copper indium chalcogenides powder of Example 5 of the preferred embodiment;
Fig. 6 is an X-ray diffraction graph of the copper indium chalcogenides powder of Example 6 of the preferred embodiment;
Fig. 7 is an X-ray diffraction graph of the copper indium chalcogenides powder of the preferred embodiment of Example 7;
Fig. 8 is an X-ray diffraction graph of the copper indium chalcogenides powder of Example 8 of the preferred embodiment;
Fig. 9 is an X-ray diffraction graph of the copper indium chalcogenides powder of Example 9 of the preferred embodiment;
Fig. 10 is an X-ray diffraction graph of the copper indium chalcogenides powder of Example 10 of the preferred embodiment;
Fig. 11 is an X-ray diffraction graph of the copper indium chalcogenides powder of Comparative Example 1;
Fig. 12 is an X-ray diffraction graph of the copper indium chalcogenides powder of Comparative Example 2;
Fig. 13 is an X-ray diffraction graph of a copper indium chalcogenides target of Example 11 of the preferred embodiment according to this invention; and
Fig. 14 is an X-ray diffraction graph of a copper indium chalcogenides thin film of Example 12 of the preferred embodiment according to this invention.

The preferred embodiment of a method for making a copper indium chalcogenides powder according to this invention includes the steps of (a) refluxing a reactant mixture that contains a Cu-containing material, an In-containing material, and a chalcogenides-containing material in a polar organic solvent so as to form a precipitate of the copper indium chalcogenides in the polar organic solvent, the polar organic solvent being selected from the group consisting of dimethyl formamide, 1-Butyl-3-methylimidazolium hexafluorophosphate, and combinations thereof; and (b) separating the polar organic solvent from the precipitate so as to obtain the copper indium chalcogenides powder.

The lone electron pair of the molecular structure of the polar organic solvent can chelate with the copper of the Cu-containing material so as to facilitate reaction of the Cu-containing material, the In-containing material, and the chalcogenides-containing material. In addition, since the polar organic solvent has a dipole moment greater than 2.3 debye, i. e. , having a relatively high polarity, the Cu-containing material, the In-containing material, and the chalcogenides-containing material, which are ionic reactants, can be easily and completely dissolved therein. As a consequence, the reaction of the reactant mixture can be conducted under a homogeneous phase so as to enhance collision probability of the reactants and so as to improve the reaction rate.

Preferably, the solvent has a dipole moment greater than 3.5 debye.

It is noted that the polar organic solvent suitable for use in the invention can be a non-ionic liquid, such as dimethyl formamide, dimethyl acetamide, dimethyl sulfoxide, N-methylpyrrolidone, pyridine, or an ionic liquid, such as 1-Butyl-3-methylimidazolium hexafluorophosphate, 1-Butyl-3-methylimidazolium chloride, and combinations thereof. In the present invention, the solvent is selected from the group consisting of dimethyl formamide, 1-Butyl-3-methylimidazolium hexafluorophosphate, and combinations thereof.

In this embodiment, the reaction in step (a) is conducted by reflux reaction under an inert gas environment.

Preferably, the inert gas in the inert gas environment is selected from the group consisting of N₂, Ar, He, and combinations thereof.

In some embodiments, the reflux reaction time is not less than 4 hr. Preferably, the reflux reaction time ranges from 4 to 48hr, and more preferably, ranges from 8 to 48 hr.

In some embodiments, the reflux reaction is under a temperature ranging from 90 to 300°C, and more preferably, ranging from 120 to 300°C.

In some embodiments, the solvent is in an amount ranging from 50% to 90% by volume based on the total volume of a reactor.

In some embodiments, the Cu-containing material is selected from the group consisting of CuCl, CuCl₂ · 2H₂O, CuSO₄, and combinations thereof.

In some embodiments, the In-containing material is selected from the group consisting of InCl₃ · 4H₂O, In₂O₃, In (NO₃)₃, and combinations thereof.

In some embodiments, the chalcogenides-containing material is selected from the group consisting of Se, Na₂Se, S, and combinations thereof.

In some embodiments, the Cu-containing material, the In-containing material, and the chalcogenides-containing material have a molar concentration ratio ranging from 0.9:1.1:1.9 to 1.1:0.9:2.2.

In one embodiment, the reactant mixture further includes a Ga-containing material.

Preferably, the Cu-containing material, the In-containing material, the Ga-containing material, and the chalcogenides-containing material have a molar concentration ratio ranging from 0.9:0.88:0.22:2.2 to 1.1:0.72:0.18:1.9.

Preferably, the Ga-containing material is selected from the group consisting of Ga, GaCl₃, and combinations thereof.

This invention also provides a method for making a copper indium chalcogenides target. The method includes the aforesaid steps (a) and (b) and further includes the steps of: (c) placing the copper indium chalcogenides powder in a cavity in a mold (not shown) ; (d) vacuuming the cavity in the mold; (e) heating the copper indium chalcogenides powder and applying a pressure to the mold such that the mold presses against the copper indium chalcogenides powder so as to form a sintered product; and (f) releasing the pressure applied to the mold and cooling the mold prior to removal of the sintered product from the mold.

In this embodiment, the cooling of the mold in step (f) is conducted by introducing a coolant of an inert gas to pass through the cavity.

Note that when the pressure applied to the mold is too high, undesired conversion of the copper indium chalcogenides into other compounds is likely to occur during formation of the copper indium chalcogenides target.

Preferably, the cavity in step (d) is vacuumed to a vacuum pressure ranging from 1.33x10⁻⁵ bar (10⁻² torr) to 1.33x10⁻⁸ bar (10⁻⁵ torr).

In some embodiments, the heating in step (e) is under a heating rate ranging from 2°C /min to 10°C /min, and the pressure applied to the mold in step (e) is gradually raised under a rate ranging from 1Mpa/min to 3Mpa/min.

It is noted that the operating conditions in step (e) considerably affect densification of the sintered product. When a predetermined temperature, pressure or processing time is insufficient, the structure of the sintered product becomes relatively loose. In contrast, when the temperature, pressure orprocessing time is too high, the process becomes ineffective. In addition, when the temperature is too high, an undesired δ-phase of the copper indium chalcogenides target can be formed due to a phase transition. Preferably, the copper indium chalcogenides powder is heated in step (e) to a temperature ranging from 500°C to 800°C, and the pressure applied to the mold is raised in step (e) to a pressure ranging from 60Mpa to 180Mpa for 1 to 8hr.

This invention further provides a method of making a copper indium chalcogenides thin film formed on a substrate (not) shown) by sputtering of the copper indium chalcogenides target under an inert gas environment.

During sputtering, when the inert gas pressure is too high, deposition of the copper indium chalcogenides plasma is adversely affected by excessive inert gas, which results in a poor deposition rate and poor crystallization of the copper indium chalcogenides. On the contrary, when the inert gas pressure is too low, the inert gas is insufficient, thereby resulting in a decrease in a disassociated rate of the inert gas, which results in failure of the deposition. Preferably, the inert gas pressure ranges from 1.33x10⁻⁶ bar (1mtorr) to 6.65x10⁻⁵ barr (50mtorr).

In addition, when an output power applied on the target is too high during sputtering, the deposition rate can be improved but an adhesion between the thin film and the substrate will decrease. On the contrary, when the output power is too low, a deposition time will be prolonged due to the low deposition rate. Preferably, the output power ranges from 20W to 300W, more preferably, from 20W to 150W.

Moreover, when a substrate temperature is too low during sputtering, a problem, such as breaking of the thin film, will occur due to a temperature difference between the substrate and the high-temperature plasma. Preferably, the substrate temperature ranges from 25°C to 450°C, more preferably, from 12C°C to 350°C.

Furthermore, when a distance between the target and the substrate is too small during sputtering, the substrate can be undesirably raised to a relatively high temperature by direct contact with the high-temperature plasma, which results in cracking of the thin film formed on the substrate due to a difference in the thermal expansion coefficients between the substrate and the thin film. Preferably, the distance ranges from 5cm to 15cm.

The merits of the method for making the copper indium chalcogenides powder of this invention will become apparent with reference to the following Examples and Comparative Examples.

### Example

### Example 1 (E1)

A reactant mixture of 102.96g CuCl, 243.36 InCl₃ · 4H₂O, 14.36g Ga, and 164.32g Se in a mole ratio of 1:0.8;0.2:2, was dissolved in a solvent of 1200ml dimethyl formamide (DMF) in a N₂ environment. Subsequently, the reactant mixture was stirred under a stirring rate of 300rpm and refluxed under a temperature of 180°C for 48hr so as to form a copper indium chalcogenides precipitate. After drying the copper indium chalcogenides precipitate, the copper indium chalcogenides powder thus formed has a formula of CuIn_{0.8}Ga_{0.2}Se₂, a weight of about 339.77g, and an average diameter ranging from about 1 µ m to about 5 µm.

### Example 2 (E2)

The process conditions of Example 2 were similar to those of Example 1, except that the reactant mixture was without the Ga, and that the mole ratio of CuCl, InCl₃ · 4H₂O, and Se was 1:1:2. The copper indium chalcogenides powder thus formed has a formula of CuInSe₂ and a weight of about 349.44g.

### Example 3 (E3)

The process conditions of Example 3 were similar to those of Example 1, except that InCl₃ · 4H₂O was replaced by In₂O₃. The copper indium chalcogenides powder thus formed has a formula of CuIn_{0.8}Ga_{0.2}Se₂ and a weight of about 339.47g.

### Example 4 (E4)

The process conditions of Example 4 were similar to those of Example 1, except that InCl₃ · 4H₂O was replaced by In (NO₃)₃. The copper indium chalcogenides powder thus formed has a formula of CuIn_{0.8}Ga_{0.2}Se₂ and a weight of about 339.77g.

### Example 5 (E5)

The process conditions of Example 5 were similar to those of Example 1, except that Se was replaced by Na₂Se, and that the mole ratio of CuCl, InCl₃ · 4H₂O, Ga, and Na₂Se was 0.9:0.88:0.22:2.2. The copper indium chalcogenides powder thus formed has a formula of Cu_{0.9}In_{0.88}Ga_{0.22}Se_{2.2} and a weight of about 360.54g.

### Example 6 (E6)

The process conditions of Example 6 were similar to those of Example 1, except that CuCl was replaced by CuCl₂ · 2H₂O. The copper indium chalcogenides powder thus formed has a formula of CuIn_{0.8}Ga_{0.2}Se₂ and a weight of about 339.77g.

### Example 7 (E7)

The process conditions of Example 7 were similar to those of Example 1, except that CuCl and Se were replaced by CuCl₂ · 2H₂O and Na₂Se, respectively. The copper indium chalcogenides powder thus formed has a formula of CuIn_{0.8}Ga_{0.2}Se₂ and a weight of about 327.22g.

### Example 8 (E8) (not in accordance with the present invention)

The process conditions of Example 8 were similar to those of Example 1, except that DMF solvent was replaced by 1-Butyl-3-methylimidazolium chloride ([bmim]Cl). The copper indium chalcogenides powder thus formed has a formula of CuIn_{0.8}Ga_{0.2}Se₂ and a weight of about 339.47g.

### Example 9 (E9)

The process conditions of Example 9 were similar to those of Example 1, except that DMF solvent was replaced by 1-Butyl-3-methylimidazolium hexafluorophosphate ([bmim]PF6). The copper indium chalcogenides powder thus formed has a formula of CuIn_{0.8}Ga_{0.2}Se₂ and a weight of about 339.47g.

### Example 10 (E10) (not in accordance with the present invention)

The process conditions of Example 10 were similar to those of Example 1, except that DMF solvent was replaced by dimethyl sulfoxide (DMSO). The copper indium chalcogenides powder thus formed has a formula of CuIn_{0.8}Ga_{0.2}Se₂ and a weight of about 339.47g.

### Comparative Example 1 (CE1)

The process conditions of Comparative Example 1 were similar to those of Example 1, except that DMF solvent was replaced by tetrahydrofuran (THF).

### Comparative Example 2 (CE2)

The process conditions of Comparative Example 2 were similar to those of Example 1, except that DMF solvent was replaced by chloroform (CHCl₃).

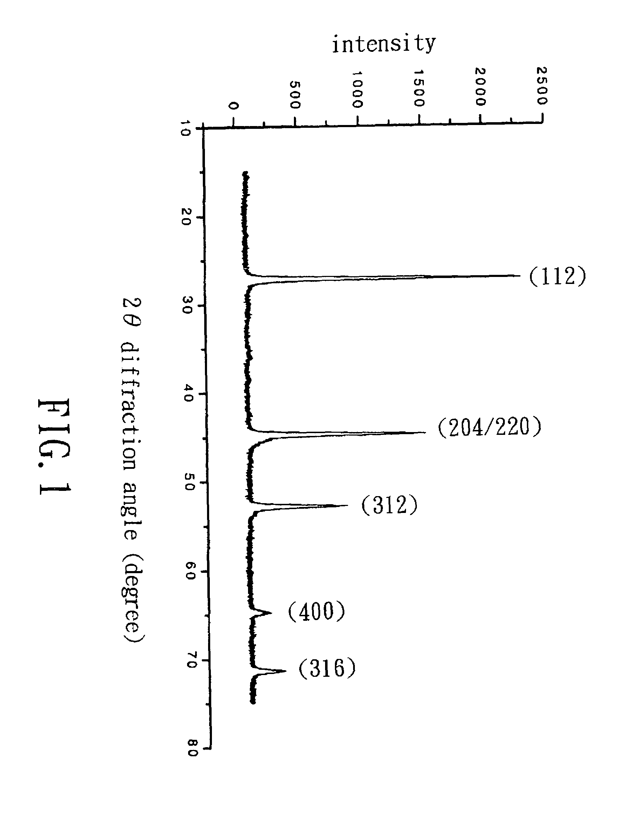

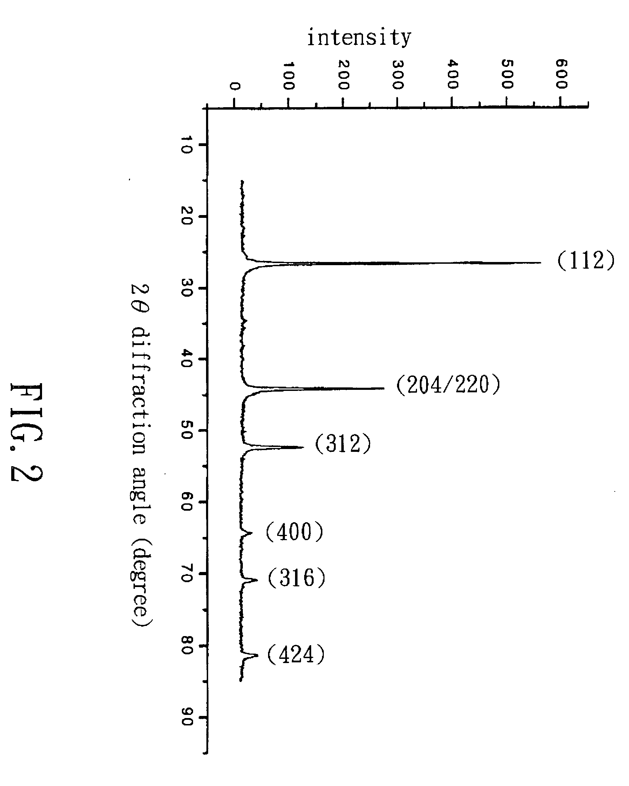

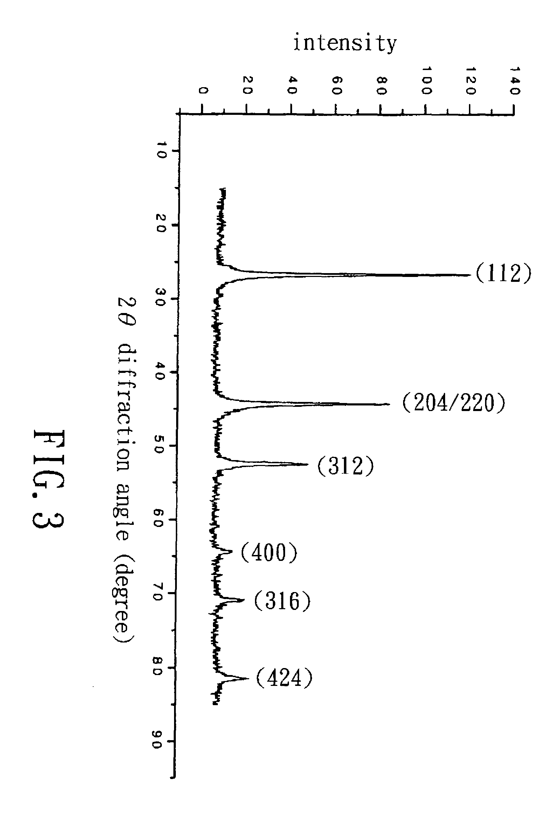

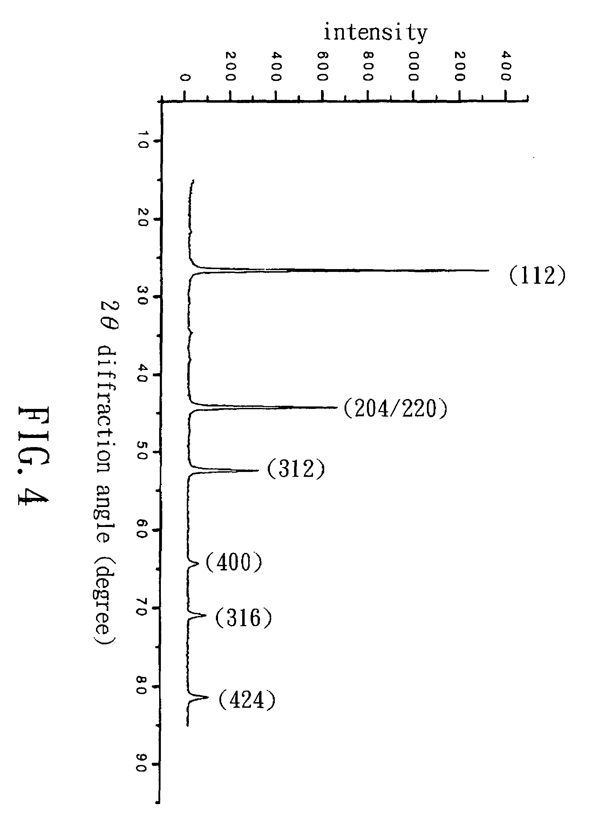

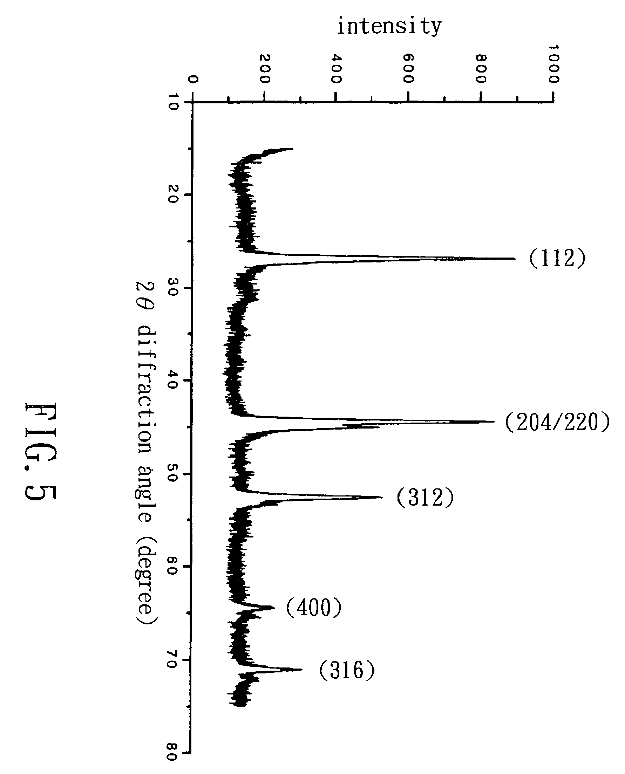

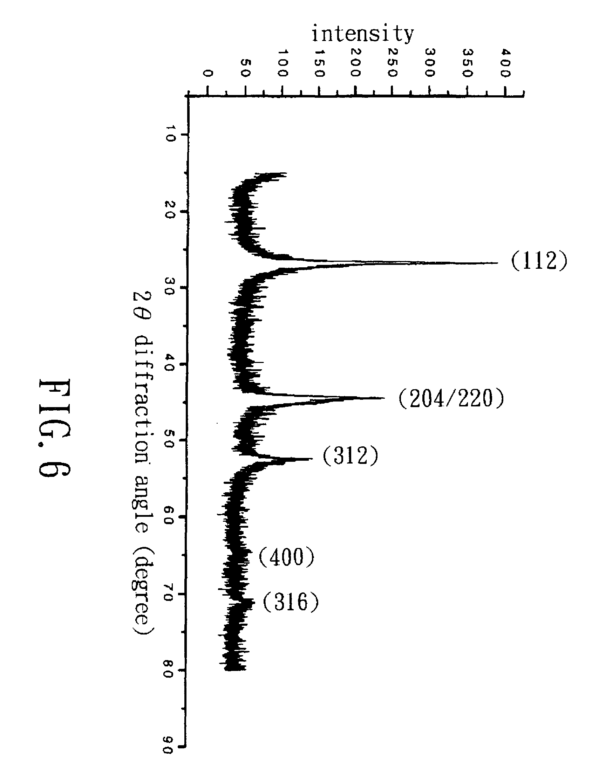

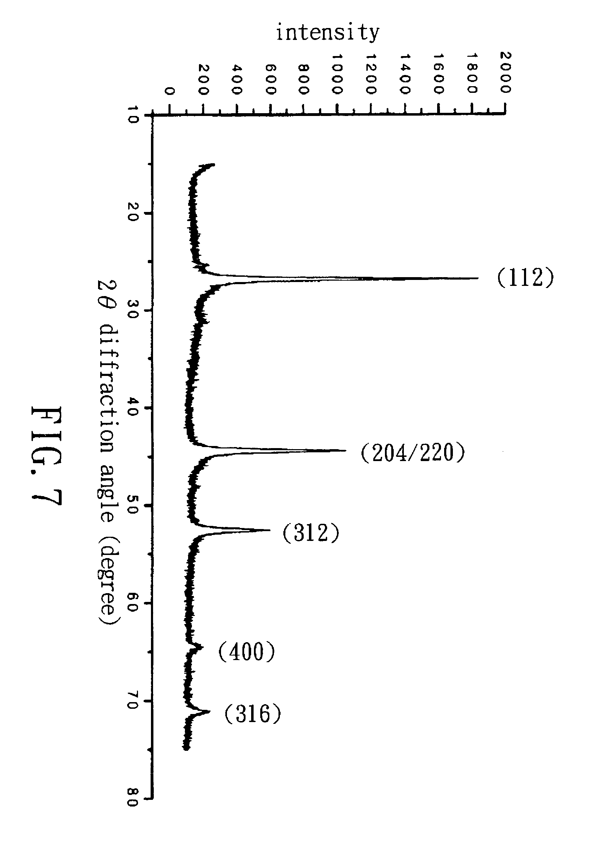

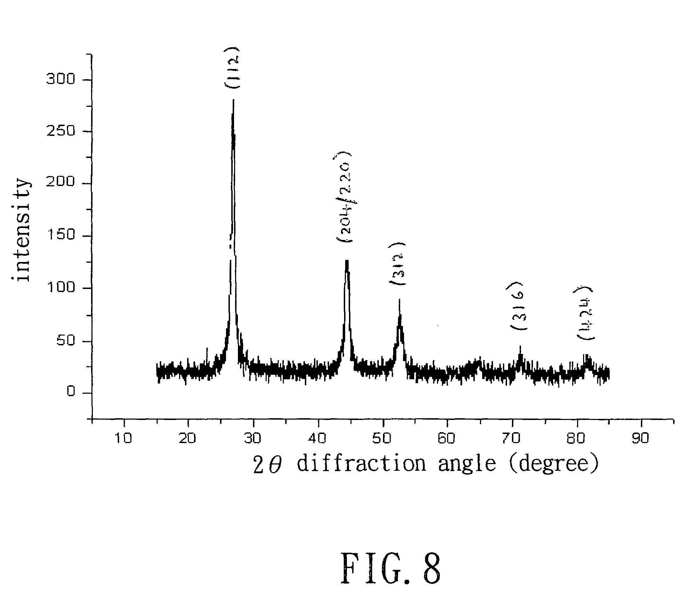

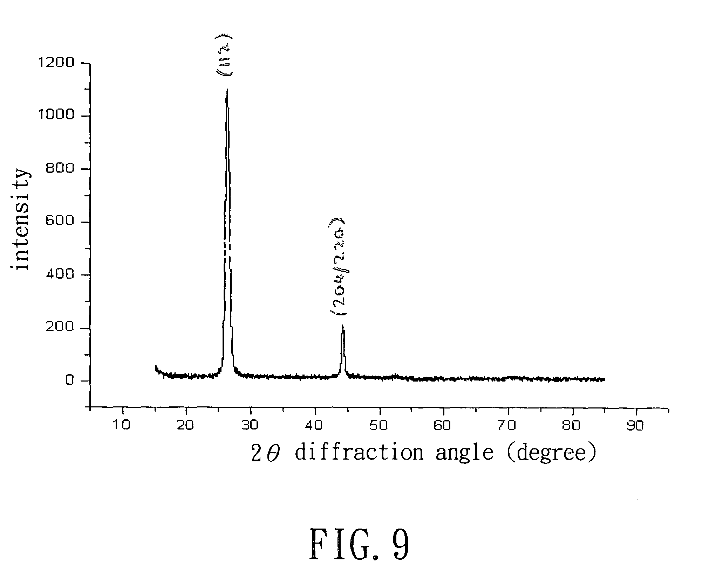

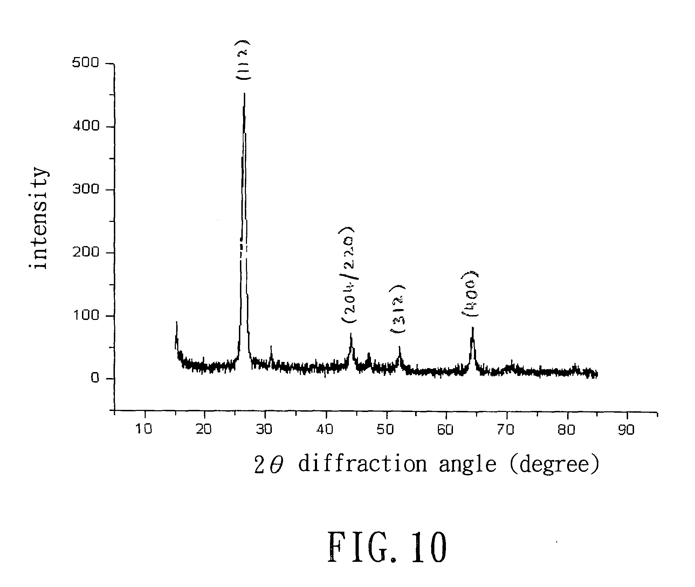

Figs. 1 to 10 are X-ray diffraction graphs of Examples 1 to 10, respectively. In each graph of Figs. 1 to 8, the left peaks 112, 204/220, 312 are chalcopyrite phase peaks of the copper indium chalcogenides at different crystal faces thereof, while the right peaks 400, 316, 424 are sphalerite phase peaks of the copper indium chalcogenides at different crystal faces thereof. The results show that the copper indium chalcogenides powders thus formed for Examples 1-8 have a single crystal structure of a chalcopyrite phase with a trace amount of sphalerite phase. Figs. 9 and 10 show similar results, i.e. the copper indium chalcogenides powders thus formed for Examples 9 and 10 have a structure of a chalcopyrite phase with a trace amount of sphalerite phase.

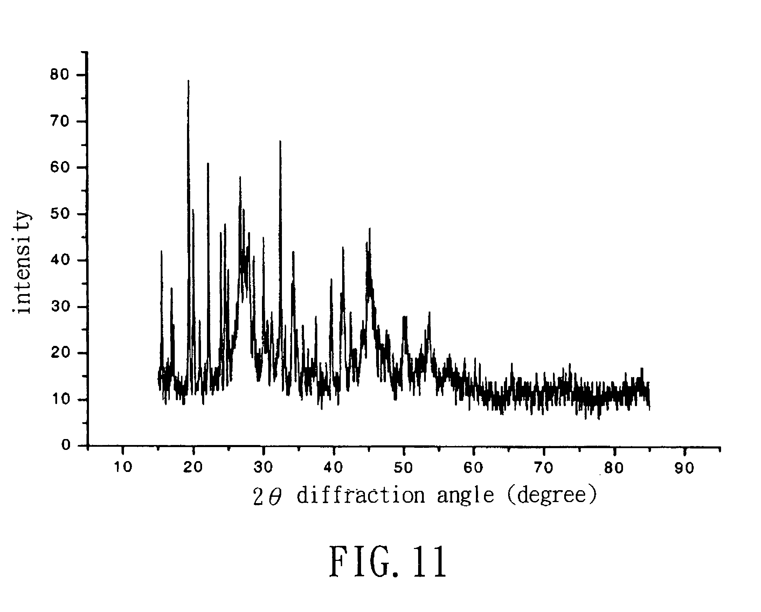

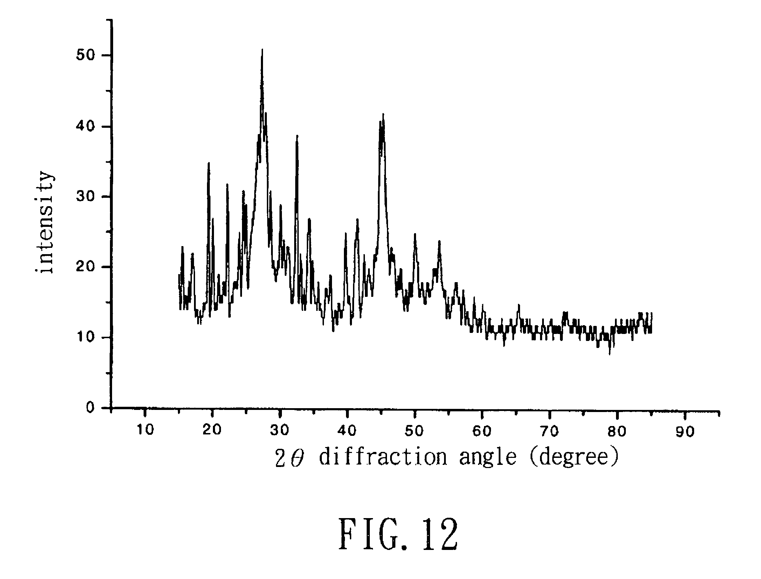

Figs. 11 and 12 are X-ray diffraction graphs of Comparative Examples 1 and 2, respectively. The results show that no chalcopyrite phase peak of the copper indium chalcogenides for the Comparative Examples 1 and 2 was found in the graphs, which indicates that the copper indium chalcogenides was not formed in Comparative Examples 1 and 2.

### Making the copper indium chalcogenides target

### Example 11 (E11)

80g of the copper indium chalcogenides powder formed from Example 6 were placed in a cavity of a mold. The cavity was vacuumed and the powder was heated under a heating rate of 5°C/min. After vacuuming the cavity to about 2.66x10⁻⁶bar (2x10⁻³torr) for approximately 1 hour, Ar gas was introduced into the cavity. The powder was then heated using the same heating rate of 5°C/min to a final temperature of 780°C, and the pressure applied to the mold was raised under a rate of 1.7Mpa/min to a final pressure of 150Mpa. The final temperature and the final pressure for thermally pressing the copper indium chalcogenides powder were maintained for 4hr. After the thermal pressing, the pressure applied to the mold was released, and the copper indium chalcogenides powder was cooled in the Ar environment so as to form the copper indium chalcogenides target having a diameter of 7.62cm (3inch) and a thickness of 3mm.

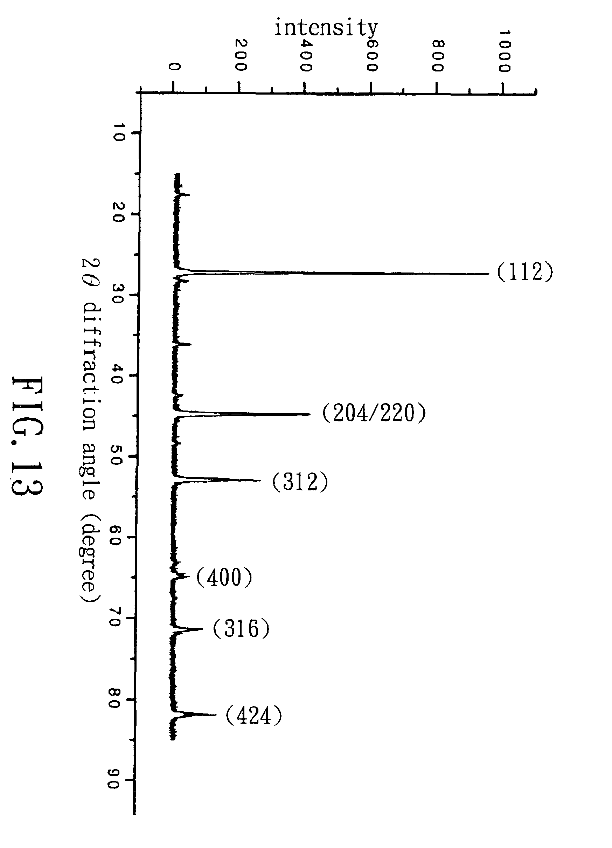

Fig. 13 is an X-ray diffraction graph of the copper indium chalcogenides target formed in Example 11. The results show that the copper indium chalcogenides target thus formed has a single crystal structure of the chalcopyrite phase with only a trace amount of the sphalerite phase.

### Making the copper indium chalcogenides thin film

### Example 12 (E12)

A substrate was disposed in a sputtering chamber of a magnetron DC sputtering system under a working pressure of 1.06x10⁻⁵ bar (8mtorr) that was maintained by introducing Ar gas thereinto at a flow rate of 19 sccm. Subsequently, an output power of 75W was applied on the copper indium chalcogenides target so as to form the copper indium chalcogenides thin film on the substrate. During sputtering, the substrate had a substrate temperature of 200°C and was spaced apart from the target by a distance of 10cm.

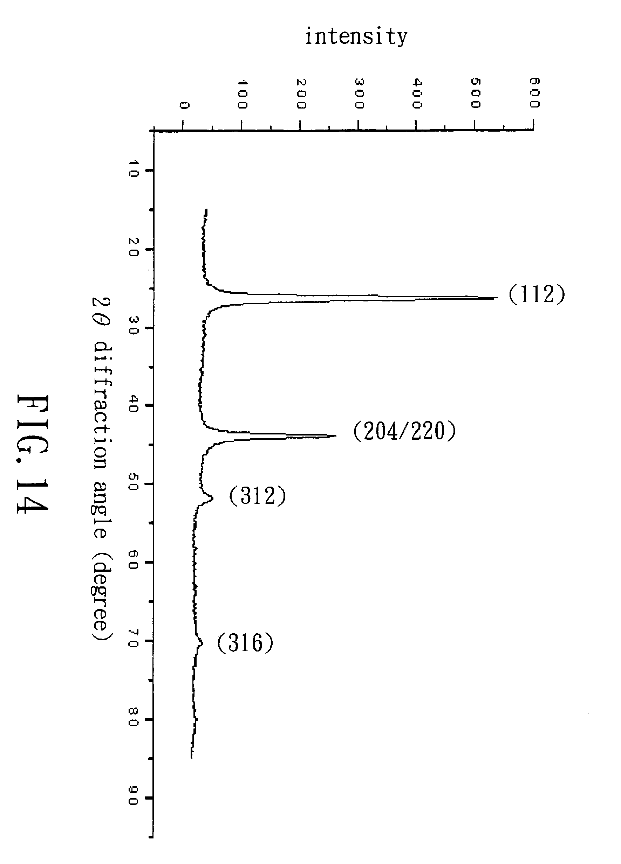

Fig. 14 is an X-ray diffraction graph of the copper indium chalcogenides thin film formed in Example 12. The results show that the copper indium chalcogenides thin film thus formed has a single crystal structure of the chalcopyrite phase with a trace amount of the sphalerite phase.

By reacting the reactant mixture in the polar organic solvent in the method of this invention, the aforesaid drawbacks associated with the prior art can be eliminated.

## Claims

1. A method for making a copper indium chalcogenides powder, comprising:
(a) refluxing a reactant mixture that contains a Cu-containing material, an In-containing material, and a chalcogenides-containing material in a polar organic solvent so as to form a precipitate of the copper indium chalcogenides in the polar organic solvent, the polar organic solvent being selected from the group consisting of dimethyl formamide, 1-Butyl-3-methylimidazolium hexafluorophosphate, and combinations thereof; and
(b) separating the polar organic solvent from the precipitate so as to obtain the copper indium chalcogenides powder.

2. The method of claim 1, wherein the refluxing of the reactant mixture in step (a) is conducted under an inert gas environment.

3. The method of claim 1, wherein the Cu-containing material is selected from the group consisting of CuCl, CuCl₂ · 2H₂O, CuSO₄, and combinations thereof.

4. The method of claim 1, wherein the In-containing material is selected from the group consisting of InCl₃ · 4H₂O, In₂O₃, In (NO₃)₃, and combinations thereof.

5. The method of claim 1, wherein the chalcogenides-containing material is selected from the group consisting of Se, Na₂Se, S, and combinations thereof.

6. The method of claim 1, wherein the Cu-containing material, the In-containing material, and the chalcogenides-containing material have a molar concentration ratio ranging from 0.9:1.1:1.9 to 1.1:0.9:2.2.

7. The method of claim 1, wherein the reactant mixture further contains a Ga-containing material.

8. The method of claim 7, wherein the Cu-containing material, the In-containing material, the Ga-containing material, and the chalcogenides-containing material have a molar concentration ratio ranging from 0.9:0.88:0.22:2.2 to 1.1:0.72:0.18:1.9.

9. The method of claim 7, wherein the Ga-containing material is selected from the group consisting of Ga, GaCl₃ and combinations thereof.

10. A method of making a copper indium chalcogenides target, the method including making a copper indium chalcogenides powder according to the method of claim 1, and further including the step of: (c) placing the copper indium chalcogenides powder in a cavity in a mold; (d) vacuuming the cavity in the mold; (e) heating the copper indium chalcogenides powder and applying a pressure to the mold such that the mold presses against the copper indium chalcogenides powder so as to form a sintered product; and (f) releasing the pressure applied to the mold and cooling the mold prior to removal the sintered product from the mold.

11. A method of making a copper indium chalcogenides film, the method including the steps of making a copper indium chalcogenides target as set forth in claim 10, followed by sputtering of said copper indium chalcogenides target.

## Patentansprüche

1. Verfahren zur Herstellung eines Kupfer-Indium-Chalkogenid-Pulvers, umfassend:
(a) Refluxieren einer Reaktantenmischung, die ein Cu-haltiges Material, ein In-haltiges Material und ein Chalkogenid-haltiges Material enthält, in einem polaren organischen Lösungsmittel, um einen Niederschlag der Kupfer-Indium-Chalkogenide in dem polaren organischen Lösungsmittel zu bilden, wobei das polare organische Lösungsmittel ausgewählt ist aus der Gruppe bestehend aus Dimethylformamid, 1-Butyl-3-methylimidazoliumhexafluorophosphat und deren Kombinationen; und
(b) Abtrennen des polaren organischen Lösungsmittels von dem Niederschlag, um das Kupfer-Indium-Chalkogenid-Pulver zu erhalten.

2. Verfahren nach Anspruch 1, bei dem das Refluxieren der Reaktantenmischung in Schritt (a) unter einer Inertgasumgebung durchgeführt wird.

3. Verfahren nach Anspruch 1, bei dem das Cu-haltige Material ausgewählt ist aus der Gruppe bestehend aus CuCl, CuCl₂·2H₂O, CuSO₄ und deren Kombinationen.

4. Verfahren nach Anspruch 1, bei dem das In-haltige Material ausgewählt ist aus der Gruppe bestehend aus InCl₃·4H₂O, In₂O₃, In(NO₃)₃ und deren Kombinationen.

5. Verfahren nach Anspruch 1, bei dem das Chalkogenid-haltige Material ausgewählt ist aus der Gruppe bestehend aus Se, Na₂Se, S und deren Kombinationen.

6. Verfahren nach Anspruch 1, bei dem das Cu-haltige Material, das In-haltige Material und das Chalkogenid-haltige Material ein molares Konzentrationsverhältnis im Bereich von 0,9:1,1:1,9 bis 1,1:0,9:2,2 aufweisen.

7. Verfahren nach Anspruch 1, bei dem die Reaktantenmischung weiter ein Gahaltiges Material enthält.

8. Verfahren nach Anspruch 7, bei dem das Cu-haltige Material, das In-haltige Material, das Ga-haltige Material und das Chalkogenid-haltige Material ein molares Konzentrationsverhältnis im Bereich von 0,9:0,88:0,22:2,2 bis 1,1:0,72:0,18:1,9 aufweisen.

9. Verfahren nach Anspruch 7, bei dem das Ga-haltige Material ausgewählt ist aus der Gruppe bestehend aus Ga, GaCl₃ und deren Kombinationen.

10. Verfahren zur Herstellung eines Kupfer-Indium-Chalkogenid-Targets, wobei das Verfahren die Herstellung eines Kupfer-Indium-Chalkogenid-Pulvers nach dem Verfahren gemäß Anspruch 1 einschließt und weiter den Schritt: (c) Anordnen des Kupfer-Indium-Chalkogenid-Pulvers in einem Hohlraum in einer Form; (d) Evakuieren des Hohlraums in der Form; (e) Erwärmen des Kupfer-Indium-Chalkogenid-Pulvers und Beaufschlagen der Form mit Druck, so dass die Form gegen das Kupfer-Indium-Chalkogenid-Pulver gepresst wird, um ein gesintertes Produkt zu bilden; und (f) Aufheben des Drucks, mit dem die Form beaufschlagt wurde, und Abkühlen der Form vor der Entfernung des gesintertes Produkts aus der Form einschließt.

11. Verfahren zur Herstellung eines Kupfer-Indium-Chalkogenid-Films, wobei das Verfahren die Schritte der Herstellung eines Kupfer-Indium-Chalkogenid-Targets nach Anspruch 10 umfasst, gefolgt vom Sputtern des Kupfer-Indium-Chalkogenid-Targets.

## Revendications

1. Procédé de préparation d'une poudre de chalcogénures d'indium et de cuivre, comprenant :
(a) porter à reflux un mélange réactionnel qui contient un matériau contenant du cuivre, un matériau contenant de l'indium, et un matériau contenant des chalcogénures dans un solvant organique polaire de manière à former un précipitat des chalcogénures d'indium et de cuivre dans le solvant organique polaire, le solvant organique polaire étant choisi parmi le groupe consistant en diméthyl formamide, 1-butyl-3-méthylimidazolium hexafluorophosphate, et des combinaisons de ce dernier ; et
(b) séparer le solvant organique polaire du précipitat de manière à obtenir la poudre de chalcogénures d'indium et de cuivre.

2. Procédé selon la revendication 1, dans lequel la mise au reflux du mélange réactionnel dans l'étape (a) est réalisée sous une atmosphère de gaz inerte.

3. Procédé selon la revendication 1, dans lequel le matériau contenant du cuivre est choisi parmi le groupe consistant en CuCl, CuCl₂ · 2H₂O, CuSO₄, et des combinaisons de ces derniers.

4. Procédé selon la revendication 1, dans lequel le matériau contenant de l'indium est choisi parmi le groupe consistant en InCl₃ · 4H₂O, In₂O₃, In(NO₃)₃, et des combinaisons de ces derniers.

5. Procédé selon la revendication 1, dans lequel le matériau contenant des chalcogénures est choisi parmi le groupe consistant en Se, Na₂Se, S, et des combinaisons de ces derniers.

6. Procédé selon la revendication 1, dans lequel le matériau contenant du cuivre, le matériau contenant de l'indium, et le matériau contenant des chalcogénures présentent un rapport de concentration molaire allant de 0,9 : 1, 1: 1,9 à 1,1 : 0,9 : 2,2.

7. Procédé selon la revendication 1, dans lequel le mélange réactionnel contient en outre un matériau contenant du gallium.

8. Procédé selon la revendication 7, dans lequel le matériau contenant du cuivre, le matériau contenant de l'indium, le matériau contenant du gallium, et le matériau contenant des chalcogénures présentent un rapport de concentration molaire allant de 0,9 : 0,88 : 0,22 : 2,2 à 1,1 : 0,72 : 0,18 : 1,9.

9. Procédé selon la revendication 7, dans lequel le matériau contenant du gallium est choisi parmi le groupe consistant en Ga, GaCl₃ et des combinaisons de ces derniers.

10. Procédé de préparation d'une cible de chalcogénures d'indium et de cuivre, le procédé incluant la préparation d'une poudre de chalcogénures d'indium et de cuivre selon le procédé de la revendication 1, et incluant en outre l'étape consistant à : (c) placer la poudre de chalcogénures d'indium et de cuivre dans une cavité d'un moule ; (d) faire le vide dans la cavité dans le moule ; (e) chauffer la poudre de chalcogénures d'indium et de cuivre et appliquer une pression au moule de sorte que le moule fasse pression contre la poudre de chalcogénures d'indium et de cuivre de manière à former un produit fritté ; et (f) libérer la pression appliquée au moule et refroidir le moule avant de retirer le produit fritté du moule.

11. Procédé de préparation d'un film de chalcogénures d'indium et de cuivre, le procédé incluant les étapes de préparation d'une cible de chalcogénures d'indium et de cuivre telle que définie dans la revendication 10, suivie par une pulvérisation cathodique de ladite cible de chalcogénures d'indium et de cuivre.
